Europäisches Patentamt

European Patent Office

Office européen des brevets

(19)

(11) Veröffentlichungsnummer: **0 052 574**
**A1**

(12) # EUROPÄISCHE PATENTANMELDUNG

(21) Anmeldenummer: 81710049.8

(22) Anmeldetag: 11.11.81

(51) Int. Cl.³: **A 23 L 3/36**
**A 23 F 3/00**

(30) Priorität: 14.11.80 DE 3042955

(43) Veröffentlichungstag der Anmeldung:
26.05.82 Patentblatt 82/21

(84) Benannte Vertragsstaaten:
AT BE FR GB IT NL SE

(71) Anmelder: Ruh, Helmut
Messkircherstrasse 64
D-7768 Stockach 2(DE)

(72) Erfinder: Ruh, Helmut
Messkircherstrasse 64
D-7768 Stockach 2(DE)

(74) Vertreter: Hiebsch, Gerhard F., Dipl.-Ing.
Erzbergerstrasse 5A Postfach 464
D-7700 Singen 1(DE)

(54) Verfahren und Vorrichtung zum Aufbereiten frischer Kräuter oder Kräutermischungen sowie Formkörper daraus.

(57) Ein Verfahren zum Aufbereiten von frischen Kräutern aller Art oder von Kräutermischungen durch Zerkleinern der Kräuter und Kühlen, soll -- u. a. durch eine neuartige Vorrichtung -- wirtschaftlicher gemacht werden und zu einem Produkt führen, in welchem die Frische der verwendeten Kräuter und deren Aroma erhalten bleibt und dessen Lagervolumen gegenüber üblicherweise getrockneten Kräutern erheblich verringert ist. Insbesondere soll dieses Verfahren für Gewürzkräuter oder Teesorten aller Art Verwendung finden können.

Dies wird dadurch erreicht, dass die Kräuter, gegebenenfalls nach einer Entrispung, zuerst in flüssigem Stickstoff bzw. Stickstoffnebel- zwischen −40° und −200° C -- bevorzugt etwa 196° C -- schockartig tiefgefroren sowie anschliessend bei −120° bis −180° C zu einem Granulat zerkleinert werden, wonach das Granulat kompaktiert und tiefgekühlt gelagert wird. Dabei hat es sich als günstig erwiesen, das Granulat bei einer Temperatur zwischen −20° und −40° C, insbesondere zwischen −24° und −34° C, zu pressen. Bevorzugt kann Teegranulat bei einer Temperatur von −28° C gepresst und in diesem Zustand dem Verbraucher anhand gegeben werden.

Fig.1

EP 0 052 574 A1

# DIPL.-ING. GERHARD F. HIEBSCH

## PATENTANWALT

PROFESSIONAL REPRESENTATIVE BEFORE THE EUROPEAN PATENT OFFICE

MANDATAIRE AGRÉÉ PRÈS L'OFFICE EUROPÉEN DES BREVETS

**0052574**

Helmut Ruh
==========

Meßkircher Str. 64
===================

7768 Stockach 2
===============

D-7700 SINGEN 1
Erzbergerstr. 5a

Telegr./Cables:
Bodenseepatent
Telex 7 93 850
Telefon (07731) 63075
         63076

Mein Zeichen
My ref./Ma réf. R-121/EPA

_ 1 _

I/ke
Datum/Date

---

Verfahren und Vorrichtung zum Aufbereiten frischer
Kräuter oder Kräutermischungen sowie Formkörper
daraus

---

Die Erfindung betrifft ein Verfahren sowie eine Vorrichtung
zum Aufbereiten von frischen Kräutern aller Art oder von
Kräutermischungen durch Zerkleinern der Kräuter und Kühlen.
Darüber hinaus zielt die Erfindung auf einen Formkörper
aus Kräutern oder Kräutermischungen.

Im Haushalt ist es allgemein üblich, daß die Hausfrau
frische Kräuter, beispielsweise Schnittlauch, zur Konservierung in kleine Krautstücke zerhackt und anschließend
im Tiefkühlfach des Kühlschrankes für eine Weiterverwendung aufbewahrt. Auf einem davon weit weg liegenden
Gebiet der Technik, nämlich für das Zerkleinern von
Schrott, ist einmal vorgeschlagen worden, diesen in
verdampftem Flüssiggas zu kühlen und hierdurch spröde
zu machen.

Angesichts dieser Gegebenheiten hat sich der Erfinder
das Ziel gesetzt, frische Kräuter durch ein Verfahren der
eingangs erwähnten Art aufzubereiten, wobei das Verfahren

- 2 -

wirtschaftlich sein und zu einem Produkt führen muß, in
welchem die Frische der verwendeten Kräuter und deren
Aroma erhalten bleibt und dessen Lagervolumen gegenüber
üblicherweise getrockneten Kräutern erheblich verringert
ist. Insbesondere soll dieses Verfahren für Gewürzkräuter
oder Teesorten aller Art Verwendung finden können.

Zur Lösung dieser Aufgabe führt, daß die Kräuter, gegebenenfalls nach einer Entrispung, zuerst in flüssigem Stickstoff bzw. Stickstoffnebel zwischen -40° und -200° C --
bevorzugt etwa 196° C -- schockartig tiefgefroren sowie
anschließend bei -120° bis -180° C zu einem Granulat zerkleinert werden, wonach das Granulat kompaktiert und tiefgekühlt gelagert wird. Dabei hat es sich als günstig erwiesen, das Granulat bei einer Temperatur zwischen -20° und
-40° C, insbesondere zwischen -24° und -34° C, zu pressen.

Bei Teesorten kann erfindungsgemäß auf die Zerkleinerung
-- zumindest aber auf das Verpressen -- verzichtet werden,
da der Verbraucher hierbei an Verpackungen in Beutelform
gewöhnt ist. Der Vorzug einer Verringerung des Lagervolumens wird dabei allerdings nur teilweise erreicht.

Im Rahmen der Erfindung liegt es jedoch auch, Teegranulat
bei einer Temperatur von -28° C zu pressen und in diesem
Zustand dem Verbraucher anhand zu geben.

Die einzelnen Kräuter -- auch die Teeblätter -- werden
durch die schockartige Erstarrung in einem Stickstoffbad,
einem Stickstoffnebel oder einem Stickstoffgasvorhang
in einen glasähnlichen Zustand versetzt, wodurch eine Verkapselung des in den Kräutern vorhanden Aromas erfolgt.
Anschließend werden die erstarrten Kräuter zu einem Granulat
zerkleinert, welches Vorprodukt für einen nachfolgenden
Preßvorgang ist. Diese Zerkleinerung erfolgt erfindungsgemäß durch mehrere gegeneinanderlaufende und zueinander einstellbare Messerwalzen, welche die genaue Kalibrierung des Granulates ermöglichen. Eine genaue Klassierung
des Granulates ist auch dadurch möglich, daß dieses vor
seiner Kompaktierung im Rahmen der Erfindung abgesiebt
wird, und zwar in einer Kälteatmosphäre, welche die Sprödigkeit des Haufwerkes beizubehalten in der Lage ist.

Nach einem weiteren Merkmal der Erfindung werden durch
Verpressen Würfel oder Tabletten erzeugt, welche die
Kräuter bzw. Kräutermischung in handliche Formen faßt.
Gegenüber getrockneten Kräutern ergibt sich durch diese
Würfel eine Einsparung des Lagervolumens um etwa 7/8.

Der Preßvorgang ist nur möglich, wenn für jede Kräutersorte eine entsprechende Temperatur eingehalten wird,
beispielsweise für

| | |
|---|---|
| Schnittlauch | $-24^\circ$ C |
| Maggikraut | $-26^\circ$ C |
| Dill | $-26^\circ$ C |
| Petersilie | $-28^\circ$ C |
| Majoran | $-28^\circ$ C |
| Basilicum | $-28^\circ$ C |
| Thymian | $-30^\circ$ C |
| Bohnenkraut | $-30^\circ$ C |
| Rosmarin | $-30^\circ$ C |
| Estragon | $-32^\circ$ C |
| Oregano | $-34^\circ$ C |

Die obengenannten Werte zur Durchführung des Verfahrens
liegen im Rahmen der Erfindung.

Während beim normalen Gefrieren von Blattkräutern große
Eiskristalle entstehen, welche die Wände der Gewebezellen
zerstören und das Gewebewasser freisetzen, wird durch
das schockartige Tiefgefrieren mittels Stickstoffs in den
Kräutern eine Mikrokristallstruktur ohne Zerstörung der
Zellwände erzeugt; das Wasser bleibt im Blatt erhalten
und ermöglicht beim Auftauen die Regeneration der ursprünglichen Frische.

Von besonderer Bedeutung für das erfindungsgemäße Verfahren ist ein weiteres Merkmal der Erfindung, wonach
beim Komprimiervorgang eine kurzzeitige Wärmebeaufschlagung der Würfel- oder Tablettenflächen erfolgt, um die
Gleitfähigkeit dieser entstehenden Formkörper im Formwerkzeug zu erhalten. Hierbei werden die Außenflächen der
Formkörper leicht angetaut und -- nach einem anderen Merkmal der Erfindung -- durch anschließendes kurzes Tiefgefrieren wieder verfestigt. Hierdurch wird die Stabilität
der tiefgefrorenen Körper erheblich verbessert.

Für die Würfel, Tabletten od. dgl. Formkörper hat sich
eine Lagertemperatur von -20° bis -28° C in Tiefkühlzellen
als günstig erwiesen.

Eine erfindungsgemäße Vorrichtung zur Durchführung des
Verfahrens zeichnet sich dadurch aus, daß einem Preßaggregat zum Herstellen von Formkörpern eine Einlauf- oder
Förderstrecke in einer Kammer mit wenigstens einer Einrichtung zur Erzeugung eines Flüssigstickstoffnebels oder
mit einem Flüssigstickstoffbad vorgeschaltet ist. Dabei
hat es sich als besonders günstig erwiesen, dem Preßaggregat eine Zerkleinerungszone vorzuschalten, der gegebenenfalls noch vor dem Preßwerkzeug ein Klassiersieb folgen kann.

Wie bereits angedeutet, gehört es in den Rahmen der Erfindung, gegebenenfalls die Formkörperoberfläche/n kurzzeitig anzutauen, wozu wenigstens eine der Preßflächen des
Preßaggregats wärmebeaufschlagbar ausgebildet, beispielsweise einem Heizelement benachbart, ist. Sowohl letzteres
als auch die Einrichtungen zur Erzeugung des Flüssigstickstoffnebels können nach einem anderen Merkmal der Erfindung
an einen Regler angeschlossen oder in anderer Weise thermostatisch gesteuert sein.

Im Rahmen der Erfindung liegt auch ein tiefgefrorener Formkörper in der Art eines Würfels oder einer Tablette, wie
er in jedem Haushalt als Eiswürfel zum Stande der Technik
gehört. Im Unterschied zu dem bekannten Eiswürfel besteht
der erfindungsgemäße Formkörper aus einem Granulat frischer
Kräuter, insbesondere aus einem Granulat von Gewürzkräutern,
die schockgefroren und anschließend zerkleinert gepreßt
sind. Diese granulatartige Struktur ist am fertigen Würfel
bzw. an der gebrauchsfertigen Tablette noch zu erkennen.
Auch ist feststellbar, daß die Rand- bzw. Oberflächenbereiche des Formkörpers dann -- gegenüber dem Kern des Formkörpers -- eine sprödere bzw. härtere Beschaffenheit aufweisen
können, wenn der Formkörper nach dem Pressen nachgefroren
worden ist.

Weitere Vorteile, Merkmale und Einzelheiten der Erfindung ergeben sich aus der nachfolgenden Beschreibung bevorzugter Ausführungsbeispiele sowie anhand
der Zeichnung; diese zeigt in:

Fig. 1: den schematischen Längsschnitt durch eine
Vorrichtung zum Aufbereiten frischer Kräuter;

Fig. 2: eine Schrägsicht auf einen teilweise geschnittenen Formkörper;

Fig. 3: eine Schrägsicht auf eine Gruppe anderer Formkörper;

Fig. 4: eine Schrägsicht auf einen weiteren -- teilweise
wiedergegebenen -- Formkörper mit davon getrenntem Teil.

Eine Vorrichtung 1 weist unterhalb eines Zuführtrichters
2 einen Förderer 3 für nicht wiedergegebene Kräuter auf.

Das Übergabehaupt 4 des Förderers 3 ragt in einen Tunnel
5 aus wärmeisolierten Wänden 6 ein. Oberhalb des Förderers
3 sind im Tunnel 5 düsenartige Einrichtungen 7 zur Einleitung von Flüssigstickstoff mit einer beispielsweisen
Temperatur von -196$^\circ$ C vorgesehen. Diese Einrichtungen 7
sind mit einem Regler 8 zur Einstellung der Temperatur
verbunden. Die Stickstoffquelle ist in der Zeichnung vernachläßigt.

Dem Übergabehaupt 4 des Förderers 3 bzw. der Schockgefrierzone A folgt in Förderrichtung ein Walzenpaar 9,
in dessen Walzenspalt 10 die im Tunnel 5 tiefgefrorenen
frischen Kräuter zu Granulat zerkleinert werden.

Mit 11 ist ein lösbarer Siebeinbau bezeichnet, der dann
eingesetzt wird, wenn die Korngröße des Granulats ein
bestimmtes Maß nicht überschreiten darf; ein gegebenenfalls abgesiebtes Überkorn wird in nicht dargestellter
Weise zum Walzenspalt 10 zurückgeführt.

Von der Zerkleinerungszone B gelangt das Granulat in ein
Preßwerkzeug 12 einer Preßzone C. In diesem Preßwerkzeug
12 -- beispielsweise brikettpressenartig mit Hubstempel
13 und nicht erkennbarer Preßkammer ausgestattet -- wird
das Granulat zu Würfeln 20 kompaktiert, die einen nachgeschalteten Gefriertunnel 15 durch eine Schleuse 16 verlassen; im Nachgefriertunnel 15 finden sich ebenfalls
   düsenartige Einrichtungen 7, die an einen -- gegebenenfalls eigenen -- Regler 8 angeschlossen sind.

An den vom Preßwerkzeug 12 angebotenen Gleitflächen 14
sind Heizelemente 17 vorgesehen, die über einen gesonderten Regler 18 gesteuert werden. Die Anwärmung der Gleitfläche/n 14 führt zu einem Antauen der anliegenden Oberfläche 21 des Würfels bzw. Formkörpers 20.

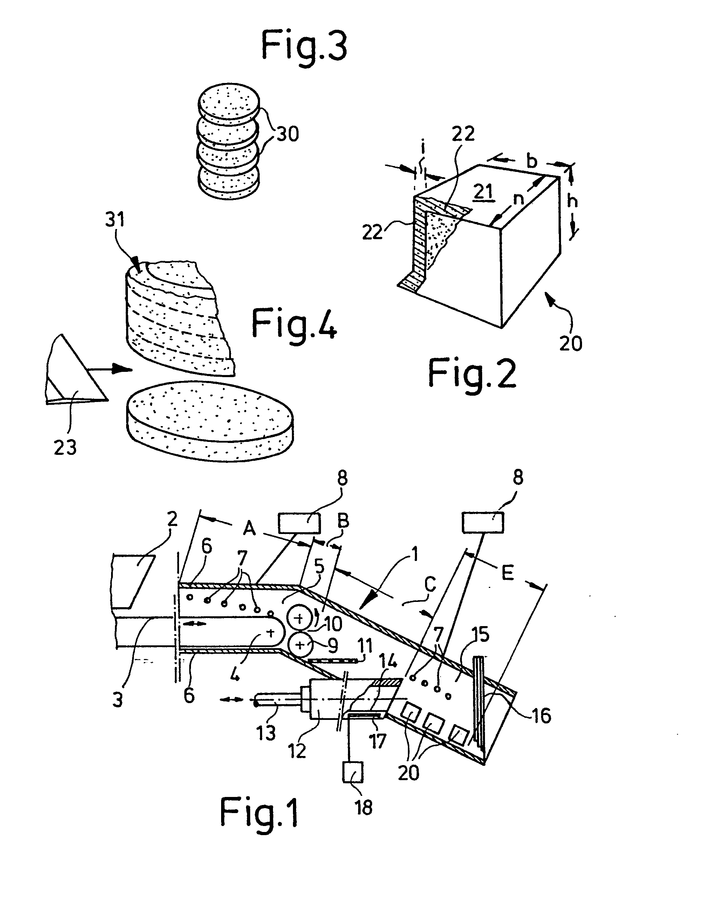

Ein derartiger Würfel 20 aus gepreßtem und mittels
Flüssigstickstoffs tiefgefrorenem Granulat frischer Kräuter ist in Fig. 2 wiedergegeben mit einer beispielsweisen
Höhe h von 14 mm und gleicher Breite bzw. Länge b bzw. n.
Die Tiefe i der im Tunnel 15 bzw. in der dadurch entstehenden Nachgefrierzone E erzeugten Nachgefrierschicht 22 ist in Fig. 2 der Deutlichkeit halber überhöht.

Fig. 3 zeigt einzeln gepreßte Tabletten 30 aus frischen
Kräutern, die mit Stickstoff tiefgefroren sowie anschließend als Granulat verpreßt worden sind. Ein in
gleicher Weise hergestellter zylindrischer Formkörper
31 wird -- wie in Fig. 4 erkennbar -- durch eine Trennklinge 23 in einzelne Tabletten 30 geteilt. Diese werden
dann nochmals mit Stickstoff nachgeschockt.

Versuche haben nachgewiesen, daß bei Anwendung des beschriebenen Verfahrens eine -- gegenüber bekannten Verfahren --
siebenfach  erhöhte Aromaausbeute bei den behandelten
Stoffen ohne weiteres zu erreichen ist.

PATENTANWALT DIPL.-ING. HIEBSCH · D - 77 SINGEN. den

A.Z.    R-121/EPA

– 9 –

PATENTANSPRÜCHE
==========================================

1. Verfahren zum Aufbereiten von frischen Kräutern aller Art oder von Kräutermischungen durch Zerkleinern der Kräuter und Kühlen, dadurch gekennzeichnet, dass die Kräuter zuerst in flüssigem Stickstoff bzw. Stickstoffnebel zwischen -4o° und -200° C schockartig tiefgefroren sowie anschliessend bei -120° C bis -180° C, bevorzugt -140° bis -160° C, zu einem Granulat zerkleinert werden, wonach das Granulat kompaktiert und tiefgekühlt gelagert wird.

2. Verfahren zum Aufbereiten von frischen Kräutern aller Art oder von Kräutermischungen durch Zerkleinern der Kräuter und Kühlen, dadurch gekennzeichnet, dass Teeblätter zuerst in flüssigem Stickstoff bzw. Stickstoffnebel zwischen -40° und -200° C schockartig tiefgefroren sowie anschliessend tiefgekühlt gelagert werden.

3. Verfahren nach Anspruch 2, dadurch gekennzeichnet, dass die Teeblätter bei einer Temperatur von etwa -28° C als Teeblätter gepresst oder nach dem Behandeln mit Stickstoff bei -120° bis -180° C, bevorzugt -140° bis -160° C, zu einem Granulat zerkleinert werden.

4. Verfahren nach Anspruch 1 oder 3, dadurch gekennzeichnet, dass das Granulat bei einer Temperatur zwischen -20° und -40° C, insbesondere zwischen -24° und -34° C, gepresst wird, wobei bevorzugt das Pressen von Schnittlauch, Maggikraut oder Dill bei einer Temperatur zwischen -24° C und -26° C oder von Petersilie, Majoran

R-121/EPA

-10-

oder Basilicum bei einer Temperatur von etwa -28° C oder das Pressen von Thymian, Bohnenkraut bzw. Rosmarin bei etwa -30° C oder von Estragon und Oregano zwischen -32° C und -34° C erfolgt.

5. Verfahren nach einem der Ansprüche 1 bis 4, dadurch gekennzeichnet, dass während des Pressvorganges eine kurzzeitige Wärmebeaufschlagung erfolgt und die entstehenden Blätter, Würfel, Tabletten od. dgl. Formkörper in ihrem Oberflächenbereich angetaut werden, wobei aus dem Granulat bevorzugt durch den Pressvorgang Würfel oder Tabletten erzeugt werden.

6. Verfahren nach einem der Ansprüche 1 bis 5, dadurch gekennzeichnet, dass das Granulat in Kälteatmosphäre klassiert wird und/oder das Granulat bzw. die Würfel, Tabletten od. dgl. Formkörper nach dem Pressvorgang durch flüssigen Stickstoff bzw. Stickstoffnebel kältegeschockt werden.

7. Vorrichtung zur Durchführung des Verfahrens nach wenigstens einem der Ansprüche 1 bis 6, dadurch gekennzeichnet, dass einem Pressaggregat (12) zum Herstellen von Formkörpern (20,30,31) eine Einlauf- oder Förderstrecke (3) in einer Kammer (5) od. dgl. mit wenigstens einer Einrichtung (7) zur Erzeugung eines Flüssigstickstoffnebels oder mit einem Flüssigstickstoffbad vorgeschaltet ist.

8. Vorrichtung nach Anspruch 7, dadurch gekennzeichnet, dass wenigstens eine der Pressflächen (14) des Pressaggregats (12) wärmebeaufschlagbar ausgebildet und/oder dem Pressaggregat (12) eine Kammer (15) od. dgl. mit wenigstens einer Einrichtung (7) zur Erzeugung eines Flüssigstickstoffnebels nachgeschaltet ist.

9. Vorrichtung nach Anspruch 7 oder 8, dadurch gekennzeichnet, dass die Einrichtung (7) zur Erzeugung des Flüssigstickstoffnebels bzw. die Heizeinrichtung (17) des Pressaggregats (12) thermostatisch gesteuert ausgebildet, gegebenenfalls an einen Regler (8 bzw. 18) angeschlossen, ist/sind, und/oder dass dem Pressaggregat (12) eine Zerkleinerungszone (B) sowie gegebenenfalls eine auswechselbare Klassiereinrichtung (11) vorgeschaltet ist.

10. Tiefgefrorener Formkörper in der Art eines Würfels oder einer Tablette, dadurch gekennzeichnet, dass er aus einem Granulat aus frischen Kräutern, insbesondere aus Gewürzkräutern, besteht, die schockgefroren und anschliessend zerkleinert gepresst sind, wobei der Formkörper gegebenenfalls einen gesondert tiefgefrorenen Oberflächenbereich (22) aufweist.

0052574

1/1

Fig.3

Fig.4

Fig.2

Fig.1

0052574

Europäisches Patentamt

**EUROPÄISCHER RECHERCHENBERICHT**

Nummer der Anmeldung

EP 81 71 0049.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | US - A - 3 965 267 (R.B. DAVIS) <br> * Ansprüche 1 bis 4 * <br> -- | 1 |
| Y | CH - A - 482 411 (GENERAL FOODS CORP.) <br> * Anspruch 11, Unteranspruch; <br> Spalte 6, Beispiel 1 * <br> -- | 1 |
| A | US - A - 3 404 989 (W.E. HIRTENSTEINER) <br> * Ansprüche 1,2 * <br> -- | |
| A | FR - A1 - 2 375 901 (BOEHRINGER MANN-HEIM GMBH) <br> * Ansprüche 1,6 * <br> -- | |
| A | BE - A - 772 978 (SOCIETE DES PRODUITS NESTLE S.A.) <br> * Ansprüche 1,3 * <br> -- | |
| A | GB - A - 896 950 (UNILEVER LTD.) <br> * Anspruch 4 * <br> ---- | |

**KLASSIFIKATION DER ANMELDUNG (Int. Cl.3)**

A 23 L 3/36
A 23 F 3/00

**RECHERCHIERTE SACHGEBIETE (Int. Cl.3)**

A 23 F 3/00
A 23 L 1/00
A 23 L 3/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 02-02-1982 | SCHULTZE |

EPA form 1503.1  06.78